**Europäisches Patentamt**

**European Patent Office**

**Office européen des brevets**

(19)

(11) Veröffentlichungsnummer : **0 122 362 B1**

# (12) EUROPÄISCHE PATENTSCHRIFT

(45) Veröffentlichungstag der Patentschrift : 12.11.86

(51) Int. Cl.⁴ : **F 16 K 27/00, F 16 K 37/00**

(21) Anmeldenummer : 84100183.7

(22) Anmeldetag : 10.01.84

(54) **Gehäuse für eine Absperrklappe.**

(30) Priorität : 18.03.83 DE 3309696

(43) Veröffentlichungstag der Anmeldung : 24.10.84 Patentblatt 84/43

(45) Bekanntmachung des Hinweises auf die Patenterteilung : 12.11.86 Patentblatt 86/46

(84) Benannte Vertragsstaaten : AT BE CH FR GB IT LI LU NL SE

(56) Entgegenhaltungen :
AT-B- 279 291
DE-B- 2 220 419
US-A- 2 932 979
US-A- 3 904 173

(73) Patentinhaber : **Klein, Schanzlin & Becker Aktiengesellschaft**
**Johann-Klein-Strasse 9**
**D-6710 Frankenthal (DE)**

(72) Erfinder : **Brein, Klaus**
**Meisenweg 7**
**D-6718 Grünstadt 10 (DE)**
Erfinder : **Ruckert, Heinz-Jürgen**
**Friedensstrasse 21**
**D-6711 Grossniedesheim (DE)**

(74) Vertreter : **Furkert, Diethelm**
**Klein, Schanzlin & Becker Aktiengesellschaft, PFL**
**Postfach 225**
**D-6710 Frankenthal (DE)**

## Beschreibung

Die Erfindung betrifft ein Gehäuse für eine drehbare Absperrklappe, mit einer Abdichtung der das Gehäuse durchstoßenden Bohrung für die untere Welle der Klappenscheibe.

Neben Absperrklappengehäusen, die eine Sacklochbohrung zur Aufnahme der unteren Klappenscheibenwelle besitzen, finden auch solche Gehäuse Anwendung, bei denen aus konstruktiven Gründen am unteren Gehäuse-Wellenlager kein Sackloch verwendet werden kann, die Bohrung also das Gehäuse durchstößt (siehe z. B. DE-B-2 220 419).

Um der Forderung nach einer hohen Dichtheit nach außen zu genügen, wurden die Wellenbohrungen bisher durch Gewindestopfen, eingeklebte Bolzen, querverstiftete Wellen mit O-Ringabdichtungen oder durch aufgeschraubte Deckel abgedichtet. Die Gemeinsamkeit dieser bekannten Abdichtungen liegt in der Notwendigkeit einer spanenden Bearbeitung des Gehäuses.

Der Erfindung liegt die Aufgabe zugrunde, eine Gehäuseabdichtung zu schaffen, bei der auf eine mechanische Bearbeitung verzichtet werden kann.

Die gestellte Aufgabe wird, ausgehend von einem Gehäuse der eingangs genannten Art, dadurch gelöst, daß sich die Bohrung für die untere Welle der Klappenscheibe zur Außenseite des Gehäuses hin verengt und daß die Bohrung mit einer Elastomerauskleidung versehen ist, welche eine Ausnehmung zur Aufnahme eines die Bohrung versperrenden, in die Elastomerauskleidung eingedrückten Deckels besitzt.

Eine die Erfindung ausgestaltende Anzeigeeinrichtung, die eine Verschiebung des Deckels erkennbar macht, zeigt mögliche Störungen an, die eine Undichtheit der Abdichtung nach sich ziehen können.

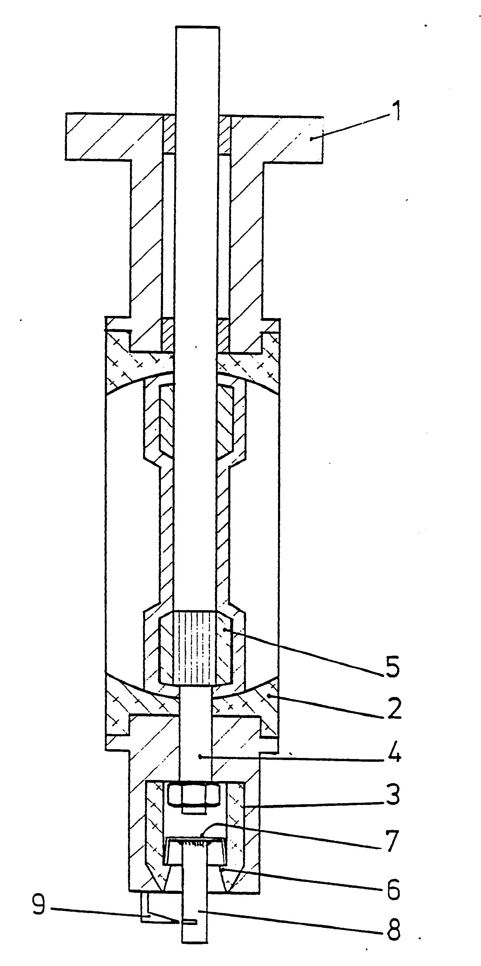

Anhand eines Ausführungsbeispiels wird die Erfindung näher erläutert. Die Zeichnung zeigt einen Ausschnitt einer im Längsschnitt dargestellten Absperrklappe. Das Gehäuse 1 der Absperrklappe ist mit einer Elastomerauskleidung 2 versehen, die bis in die Bohrung 3 für die Welle 4 der Klappenscheibe 5 hineinreicht.

Die Bohrung 3 verjüngt sich zur Außenseite des Gehäuses 1 hin. Im Ausführungsbeispiel ergibt sich die Verjüngung der Bohrung 3 durch einen konischen Verlauf ; es ließe sich aber auch eine andere Art der Bohrungsverengung, beispielsweise durch einen Stufensprung, anwenden.

Die Elastomerauskleidung 2 ist mit einer Ausnehmung 6 versehen, die einen in die Elastomerauskleidung 2 eingedrückten Deckel 7 aufnimmt. Die Gestaltung der Bohrung 3 und der Elastomerauskleidung 2 bringen es mit sich, daß der Deckel 7 zwar relativ leicht in die Elastomerauskleidung 2 eingedrückt, aber selbst durch einen hohen Innendruck nicht herausgepreßt werden kann.

Die auf den Deckel 7 ausgeübte Haltewirkung kommt folgendermaßen zustande : Der auf dem Deckel 7 lastende Innendruck, der bei einer nicht verengten Bohrung 3 den unteren Gummiwulst verdrängen würde, führt aufgrund der Verjüngung der Bohrung 3 zu einer durch den Deckel 7 ausgeübten Komprimierung der Elastomerauskleidung 2. Die durch die Vulkanisation ausgeübte Haltekraft zwischen Gehäuse 1 und Elastomerauskleidung 2 sorgt dafür, daß der durch die Kompression gebildete Gummiwulst nicht nach außen verschoben werden kann.

Die dargestellte Wirkungsweise gilt selbstverständlich nur bei Erfüllung der normalen, mit einem an sich geringen Aufwand zu erreichenden Voraussetzungen. Da auch hier die Möglichkeit von Störungen nicht auszuschließen ist, ist auf dem Deckel 7 ein Stift 8 angeordnet, dessen Markierung unter normalen Bedingungen in Höhe des am Gehäuse 1 befestigten Zeigers 9 steht. Eine an der so gebildeten Anzeigeeinrichtung erkennbare Positionsveränderung des Stiftes 8 legt den Verdacht einer Undichtheit nahe und gibt das Signal zu einer Überprüfung der Abdichtung.

## Patentansprüche

1. Gehäuse (1) für eine drehbare Absperrklappe, mit einer Abdichtung der das Gehäuse (1) durchstoßenden Bohrung (3) für die untere Welle (4) der Klappenscheibe (5), dadurch gekennzeichnet, daß sich die Bohrung (3) für die untere Welle (4) der Klappenscheibe (5) zur Außenseite des Gehäuses (1) hin verengt und daß die Bohrung (3) mit einer Elastomerauskleidung (2) versehen ist, welche eine Ausnehmung (6) zur Aufnahme eines die Bohrung (3) versperrenden, in die Elastomerauskleidung (2) eingedrückten Deckels (7) besitzt.

2. Gehäuse nach Anspruch 1, gekennzeichnet durch eine eine Verschiebung des Deckels (7) erkennbar machende Anzeigeeinrichtung (8, 9).

## Claims

1. Housing (1) for a butterfly valve with sealing of the bore (3) passing through the housing (1) for the lower shaft (4) of the valve disc (5), characterized in that the bore (3) for the lower shaft (4) of the valve disc (5) narrows towards the outside of the housing (1) and that the bore (3) is provided with an elastomer lining (2), which possesses a cutout (6) for accomodation of a lid (7) pressed into the elastomer lining (2), blocking the bore (3).

2. Housing according to claim 1, characterized by an indicating device (8, 9) which indicates a displacement of the lid (7).

## Revendications

1. Boîtier (1) pour une vanne papillon, avec étanchéité de l'alésage (3) perforant le boîtier pour l'arbre (4) inférieur du papillon (5), caractérisé en ce que l'alésage (3) pour l'arbre (4) inférieur du papillon (5) se resserre vers le côté extérieur du boîtier (1) et que l'alésage (3) est muni d'un revêtement élastomère (2), lequel possède un creux (6) pour le logement d'un couvercle (7) enfoncé dans le revêtement élastomère (2) et obstruant l'alésage (3).

2. Boîtier suivant la revendication 1, caractérisé par un voyant (8, 9) permettant de déceler tout décalage du couvercle (7).